# EUROPÄISCHE PATENTSCHRIFT

(11) **EP 1 924 524 B1**
(45) Veröffentlichungstag und Bekanntmachung des Hinweises auf die Patenterteilung: **14.11.2012**
(21) Anmeldenummer: 06793144.4
(22) Anmeldetag: 01.09.2006
(51) Int. Cl.: C01B 6/24

(54) **Verfahren zur Herstellung von Lösungen von Lithiumaluminiumhydrid**
Process for the preparation of solutions of lithium aluminium hydride
Procédé de préparation de solutions d'hydrure d'aluminium et de lithium

(30) Priorität: 01.09.2005 DE 102005041773; 14.06.2006 DE 102006028021
(43) Veröffentlichungstag der Anmeldung: 28.05.2008
(73) Patentinhaber: Chemetall GmbH, 60487 Frankfurt am Main (DE)
(72) Erfinder: LISCHKA, Uwe, 60437 Frankfurt am Main (DE); MURSO, Alexander, 60489 Frankfurt am Main (DE); WIETELMANN, Ulrich, 61381 Friedrichsdorf (DE)
(74) Vertreter: Uppena, Franz
(86) Internationale Anmeldenummer: PCT/EP2006/065919
(87) Internationale Veröffentlichungsnummer: WO 2007/026018

(56) Entgegenhaltungen:
- EP-A- 1 394 106
- WO-A-97/06097
- US-A- 3 337 308
- US-A1- 2001 051 729

## Beschreibung

Gegenstand der vorliegenden Erfindung ist ein Verfahren zur Herstellung einer Lösung von Lithiumaluminiumhydrid.

Lithiumaluminiumhydrid (LiAlH₄) ist ein starkes Reduktionsmittel, das sich in polaren Solvenzien wie Diethylether (Et₂O) oder Tetrahydrofuran (THF) gut löst. Im festen, pulverförmigen Zustand ist es wegen seiner hohen Reaktivität gegenüber Luft und Wasser sowie der Gefahr von Staubexplosionen schwer zu handhaben. Im industriellen Maßstab werden deshalb bevorzugt LiAH₄-Lösungen in organischen Lösemitteln eingesetzt. LiAlH₄ kann durch Umsetzung eines Aluminiumhalogenids, insbesondere Aluminiumchlorid (AlCl₃), mit Lithiumhydrid (LiH) in einem etherischen Lösungsmittel hergestellt werden. Bei der von Schlesinger et al. (J. Amer. Chem. Soc. 69, 1199 (1947)) entwickelten Synthese wird Et₂O als Lösemittel verwendet:

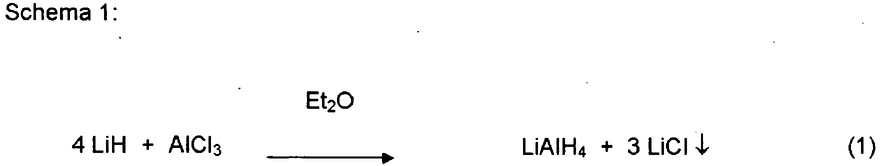

LiAlH₄ ist in Et₂O mit einem Anteil von 28 % sehr gut löslich, jedoch erfordert dieses Lösemittel aufgrund seines niedrigen Flamm- und Siedepunktes aufwändige Sicherheitsmaßnahmen. Es wird deshalb in der industriellen Anwendung möglichst gemieden.

Kommerziell angebotene LiAlH₄-Lösungen enthalten in der Regel keinen Et₂O, sondern werden als 10 %ige Lösung in THF oder 15 %ige Lösung in THF/Toluol angeboten (Broschüre der Chemetall "Industrial Use"). THF hat einen deutlich höheren Siedepunkt als Et₂O. So beträgt der Siedepunkt von THF 66°C, der von Et₂O jedoch nur 35°C.

Es gibt verschiedene Methoden, um Lösungen von LiAlH₄ in THF oder THF-haltigen Lösemittelmischungen herzustellen. Eine Möglichkeit besteht in der Umsetzung von Natriumaluminiumhydrid mit Lithiumchlorid (LiCl) (WO-A-97106097):

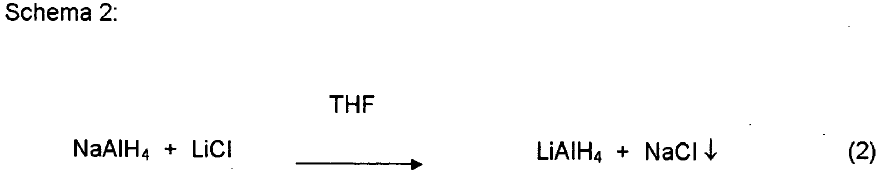

Nachteile dieses Verfahrens sind die relativ langen Reaktionszeiten und schlechten Ausbeuten.

Im industriellen Maßstab werden THF-Lösungen von LiAlH₄ durch Auflösen von festem, lösemittelfreiem LiAlH₄ in THF oder THF/Cosolvenz hergestellt. Das feste LiAlH₄ wird in diesem Falle zunächst als Lösung in Diethylether synthetisiert, die im Anschluss bei höheren Temperaturen und vermindertem Druck vollständig eingedampft wird. Dieses Verfahren hat jedoch ebenfalls gravierende Nachteile. Zunächst ist es aufgrund seiner Komplexität vergleichsweise aufwändig. Weiterhin führt die thermische Belastung des LiAlH₄ beim Eindampfen zu einer teilweisen Zersetzung gemäß dem Schema 3:

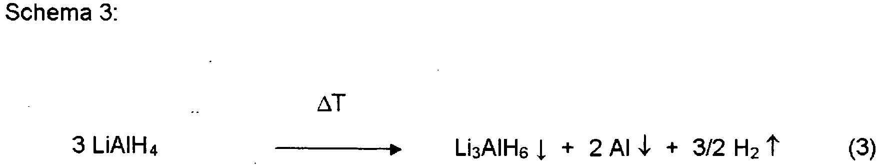

Li₃AlH₆ ist unlöslich und deshalb nicht für Reduktionsprozesse brauchbar. Die durch Auflösen von festem LiAlH₄ hergestellten Lösungen sind aufgrund des Gehaltes an elementarem Aluminium und Li3AlH₆ stark trübe; der Feststoffanteil muss beispielsweise durch Filtration oder Dekantation entfernt werden. Restgehalte von elementarem Aluminium beeinträchtigen nämlich nicht nur die Handhabungseigenschaften, sondern bewirken auch eine deutliche Verschlechterung der Lagerstabilität, da sie den Zerfallsprozess gemäß Schema 3 katalytisch beschleunigen.

Um zu einer Lösung von LiAlH₄ in THF zu gelangen, kann die Synthese gemäß Schema 1 prinzipiell auch direkt in THF durchgeführt werden (EP 1394106). Dies hat jedoch den Nachteil, dass zum einen die Löslichkeit des eingesetzten AlCl₃ nur relativ niedrig liegt. So beträgt bei Raumtemperatur (RT) die Löslichkeit von AlCl₃ in THF nur 16 %, wohin gegen sie in Et₂O 57 % beträgt. Zum anderen ist das als Nebenprodukt entstehende LiCl in THF gut löslich. So beträgt die Löslichkeit von LiCl in THF 4,8 %, in Et₂O jedoch < 0,001 %. Auf diese Weise könnten nur verdünnte und gleichzeitig mit LiCl verunreinigte LiAlH₄-Lösungen in THF hergestellt werden.

Aufgabe der vorliegenden Erfindung ist es, die Nachteile des Standes der Technik zu überwinden.

Erfindungsgemäß wird die Aufgabe durch die Merkmale des Hauptanspruchs gelöst. Vorzugsweise Ausgestaltungen finden sich in den Unteransprüchen.

Insbesondere soll die vorliegende Erfindung eine LiAlH₄-Lösung bereitstellen, die möglichst konzentriert, sicher handhabbar und kostengünstig erhältlich ist.

Erfindungsgemäß wird die Herstellung von LiAlH₄ in 2-MeTHF oder einer Lösemittelmischung, die 2-MeTHF enthält, durchgeführt.

Es wurde überraschend gefunden, dass 2-MeTHF AlCl₃ sehr gut, aber LiCl kaum löst:

**Tabelle 1:**

| RT-Löslichkeit (Gew.-%) von | AlCl₃ | LiCl | LiAlH₄ |
|---|---|---|---|
| in Diethylether | 57 | <0,001 | 28 |
| in THF | 16 | 4,8 | 21 |
| in 2-MeTHF | 45 | 0,3 | 17 |

Damit sind die notwendigen Voraussetzungen gegeben, konzentrierte LiAlH₄-Lösungen herzustellen:

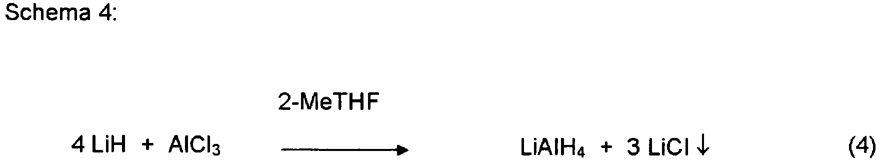

Das erfindungsgemäße Verfahren zur Herstellung der erfindungsgemäßen LiAlH₄-Lösung wird allgemein wie nachfolgend beschrieben durchgeführt, ohne die Erfindung darauf einzuschränken:

Pulverförmiges LiH wird in 2-MeTHF oder einem Kohlenwasserstoff oder einem 2-MeTHF/Kohlenwasserstoffgemisch suspendiert und eine Lösung von AlCl₃ in 2-MeTHF oder einem 2-MeTHF/Kohlenwasserstoffgemisch wird zu dieser Suspension zugegeben. Die Korngröße des LiH ist bevorzugt < 30 µm. Die Reaktion ist stark exotherm und die Reaktionswärme wird durch äußere Kühlung abgeführt.

Die Reaktionstemperatur ist lediglich im unteren Bereich durch die Erstarrungstemperatur und im oberen Bereich durch den Siedepunkt des eingesetzten Lösemittels bzw. Lösemittelgemisches begrenzt. Praktisch wird die Reaktion bei Temperaturen zwischen 0°C und 110°C durchgeführt. Bei höheren Temperaturen ist mit beginnender Produktzersetzung zu rechnen. Die bevorzugte Reaktionstemperatur liegt zwischen 20 und 90°C. LiH wird im Allgemeinen im Überschuss eingesetzt, bevorzugt mit einem Überschuss von 5 bis 20 %.

Nach vollständiger Umsetzung wird das als Nebenprodukt gebildete LiCl abgetrennt. Diese Operation kann nach dem Stand der Technik durch einen fest/flüssig-Trennschritt, beispielsweise per Filtration, Zentrifugation oder Dekantation, erfolgen. Bevorzugt ist eine filtrative Aufarbeitung. Die Filtrate sind in der Regel klar oder nur wenig trübe, farblos oder schwach gelb. Sie sind insbesondere nicht durch elementares Aluminium verunreinigt. Falls die LiAlH₄-Konzentration zu niedrig liegt, können sie durch Eindampfung, bevorzugt im Vakuum, aufkonzentriert werden.

Weiterhin wurde überraschenderweise gefunden, dass die Löslichkeit von LiCl in der erfindungsgemäßen LiAlH₄-Lösung die vom reinen Zweistoffsystem her bekannte Löslichkeit in verdünnten LiAlH₄-Lösungen überschreitet. Dies ist aus folgender Tabelle ersichtlich:

**Tabelle 2:**

| LiAlH₄-Konz. | Molverhältnis | LiCl-Löslichkeit | | Bemerkungen |
|---|---|---|---|---|
| (Gew.-%) | 2-MeTHF : LiAlH₄ | (Gew.-%) | (mol %) | |
| 0 | n. a. | 0,3 | n. a. | nur 2-MeTHF |
| 5 | 8,3 | 1,2 | 22 | nur 2-MeTHF |
| 8 | 5,1 | 1,6 | 16 | nur 2-MeTH F |
| 12 | 3,0 | 0,9 | 7 | nur 2-MeTH F |
| 11,4 | 2,2 | 0,14 | 1,1 | 2-MeTHF/Toluol |
| 14 | 1,6 | 0,08 | 0,6 | 2-MeTHF/Toluol |

| | | | | |
|---|---|---|---|---|
| n. a.: = nicht anwendbar | | | | |

Wie ersichtlich, sinkt mit fallendem 2-MeTHF : LiAlH₄-Verhältnis die LiCl-Löslichkeit deutlich. Um eine möglichst geringe LiCl-Konzentration zu erreichen, ist es bevorzugt, im Synthesegemisch ein 2-MeTHF : LiAlH₄-Verhältnis von 3,0 und besonders bevorzugt ein solches von 2,2 nicht zu überschreiten. Dies kann dadurch erreicht werden, dass entweder möglichst konzentrierte AlCl₃-Lösungen in purem 2-MeTHF eingesetzt werden, oder dass Lösungsmittelgemische verwendet werden. Es wurde überraschend gefunden, dass sich Aluminiumchlorid auch in Gemischen aus 2-MeTHF und einem Kohlenwasserstoff gut löst. So beträgt beispielsweise die Löslichkeit von AlCl₃ in einem Gemisch aus 76 % 2-MeTHF und 24 % Toluol etwa 45 %. In dieser Lösung liegt ein 2-MeTHF : AlCl₃-Molverhältnis von 1,5 vor.

Statt oder in Mischung mit Toluol können auch andere Kohlenwasserstoffe, bevorzugt aromatische wie Ethylbenzol, Xylole, Cumol oder Aliphaten wie Cyclohexan, Hexan, Methylcyclohexan, Heptan, alleine oder als Mischung von mindestens zwei dieser Lösemittel, eingesetzt werden.

Will man eine möglichst LiCl-arme LiAlH₄-Lösung herstellen, wird die Synthese bevorzugt in einem Gemisch aus 2-MeTHF und einem Kohlenwasserstoff, besonders bevorzugt einem 2-MeTHF/Toluol-Gemisch durchgeführt. In einer solchen Mischung sollte das Molverhältnis 2-MeTHF : AlCl₃ einen Wert von 1,3 nicht unterschreiten.

In einer besonders bevorzugten Ausgestaltung des erfinderischen Verfahrens wird LiH in einem Kohlenwasserstoff, beispielsweise Toluol suspendiert und eine Lösung von AlCl₃ in einem 2-MeTHF-Kohlenwasserstoffgemisch, bevorzugt in einem 2-MeTHF/Toluolgemisch, zugegeben. In dieser Lösung liegt das 2-MeTHF : AlCl₃-Verhältnis zwischen 1,3 und 3,0, bevorzugt ist ein 2-MeTHF : AlCl₃-Verhältnis von 1,5 bis 2,0.

Im Vergleich mit dem wassermischbaren, stark zur Peroxidbildung neigenden THF bietet 2-MeTHF wesentliche Vorteile bei der Verwendung in der organischen Synthese. Zum einen erlaubt es aufgrund seines höheren Siedepunktes die Einstellung höherer Temperaturen ohne die Notwendigkeit, den äußeren Druck erhöhen zu müssen. So beträgt der Siedepunkt von 2-MeTHF 78°C, gegenüber nur 66°C bei THF. Dies ist für die Hydrierung wenig reaktiver funktioneller Gruppen wie beispielsweise organischen Chloriden ein Vorteil.

Es wurde weiterhin überraschend gefunden, dass 2-MeTHF-haltige LiAlH₄-Lösungen eine besondere thermische Stabilität aufweisen: im Gegensatz zu Lösungen in THF zersetzen sie sich endotherm. Daher ist auch bei relativ hohen Temperaturen kein sogenanntes "runaway"-Szenario zu erwarten. Dies ermöglicht auch bei hohen Temperaturen ein sicheres Arbeiten.

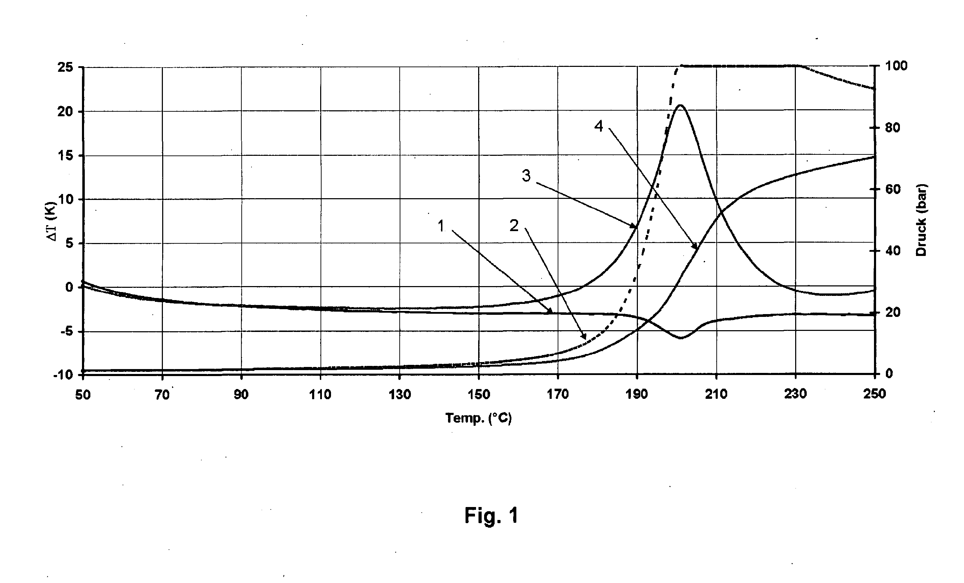

Die thermische Stabilität von 2-MeTHF-haltigen LiAlH₄-Lösungen wird in Fig. 1 verdeutlicht. Diese vergleicht die Ergebnisse von Differential Scanning Calometry-Tests in einer Radex-Apparatur einer 12%igen Lösung von LiAlH₄ in 2-MeTHF/Toluol mit der einer 15 %igen Lösung von LiAlH₄ in THF/Toluol. Es wurden jeweils 2 g eingewogen, die Aufheizrate betrug 45 K/h.
Kurve 1: 12 %ige Lösung von LiAlH₄ in 2-MeTHF/Toluol: ΔT;
Kurve 2: 12 %ige Lösung von LiAlH₄ in 2-MeTHF/Toluol: Druck;
Kurve 3: 15 %ige Lösung von LiAlH₄ in THF/Toluol: ΔT;
Kurve 4: 15 %ige Lösung von LiAlH₄ in THF/Toluol: Druck.

Weitere Vorteile schöpft der Anwender aus der Tatsache, dass 2-MeTHF und Wasser sich nur in begrenztem Maße mischen. So beträgt die Löslichkeit von 2-MeTHF in Wasser 15,1 %, die Löslichkeit von Wasser in 2-MeTHF jedoch nur 5,3 %. Es ist deshalb möglich, ein organisches Syntheseprodukt durch Phasentrennung gemeinsam mit 2-MeTHF zu isolieren. Es sind nur relativ geringfügige Produkt- und Lösungsmittelverluste durch die wässrige Phase, aus der das Lösemittel in der Regel nicht zurückgewonnen werden kann, zu erwarten. 2-MeTHF ist aus diesem Grunde einfach zu rezyklieren.

Gegenstand der Erfindung ist im Einzelnen:
- ein Verfahren zur Herstellung der erfindungsgemäßen LiAlH₄-Lösung, wobei AlCl₃ mit LiH in 2-MeTHF oder einem 2-MeTHF-haltigen Lösemittel umgesetzt wird;
- ein Verfahren zur Herstellung der erfindungsgemäßen LiAlH₄-Lösung, wobei die Konzentration LiH im Ansatz zwischen 3 und 17 Gew.-%, bevorzugt zwischen 5 und 15 Gew.-% beträgt;
- ein Verfahren zur Herstellung der erfindungsgemäßen LiAlH₄-Lösung, wobei das eingesetzte LiH-Pulver eine Korngröße < 30 µm hat;
- ein Verfahren zur Herstellung der erfindungsgemäßen LiAlH₄-Lösung, wobei die Reaktionstemperatur zwischen 0 und 100°C, bevorzugt zwischen 20 und 90°C, besonders bevorzugt zwischen 30 und 80°C, liegt;
- ein Verfahren zur Herstellung der erfindungsgemäßen LiAlH₄-Lösung, wobei die Reaktion in Anwesenheit von Kohlenwasserstoffen durchgeführt wird;
- ein Verfahren zur Herstellung der erfindungsgemäßen LiAlH₄-Lösung, wobei die Kohlenwasserstoffe aus Toluol, Ethylbenzol, Xylol, Cumol, Cyclohexan, Hexan, Methylcyclohexan, Heptan oder einer Mischung aus mindestens zwei dieser Kohlenwasserstoffe ausgewählt sind;
- ein Verfahren zur Herstellung der erfindungsgemäßen LiAlH₄-Lösung, wobei der Kohlenwasserstoff Toluol ist;
- ein Verfahren zur Herstellung der erfindungsgemäßen LiAlH₄-Lösung, wobei das Molverhälnis von 2-MeTHF : AlCl₃ zwischen 1 und 10, bevorzugt zwischen 1,3 und 5,0 liegt;
- ein Verfahren zur Herstellung der erfindungsgemäßen LiAlH₄-Lösung, wobei das als Nebenprodukt anfallende LiCl abgetrennt wird;
- ein Verfahren zur Herstellung der erfindungsgemäßen LiAlH₄-Lösung, wobei zur Entfernung von LiCl die Lösung auf ein Molverhältnis von 2-MeTHF: LiAlH₄ von maximal 3,5 konzentriert wird und das ausgefällte LiCl durch einen fest/flüssig-Trennschritt, bevorzugt durch Filtration, abgetrennt wird;
- ein Verfahren zur Herstellung der erfindungsgemäßen LiAlH₄-Lösung, wobei zur Entfernung von LiCl die Reaktionslösung im Vakuum, bevorzugt bei einem Druck

zwischen 1 bis 500 mbar, und bei einer Temperatur zwischen 20 und 100 °C, konzentriert wird;

Die Erfindung wird nachfolgend durch Beispiele erläutert, ohne sie darauf einzuschränken:

### Beispiel 1: Herstellung einer 8 %igen LiAlH₄-Lösung in reinem 2-MeTHF

In einem inertisierten, das heißt getrockneten und mit Schutzgas, beispielsweise Stickstoff oder Argon gefüllten 1 L-Doppelmantelreaktor werden 41,7 g LiH-Pulver in 40 g 2-MeTHF suspendiert. Es wird auf 35°C erwärmt und unter gutem Rühren eine Lösung von 158,7 g AlCl₃ in 370 g 2-MeTHF innerhalb von 3 Stunden zugetropft. Nach einer 1,5stündigen Nachreaktionszeit bei 35 bis 40°C wird die Reaktionssuspension auf ein G3-Glasfilter abgelassen.

Es werden 407 g einer schwach gelben, klaren Lösung erhalten.

| Analyse (mmol/g) | Li | Al | H⁻ | Cl⁻ |
|---|---|---|---|---|
| | 2,50 | 2,13 | 9,33 | 0,37 |

Daraus errechnet sich:

LiAlH₄ = 8,1 Ges.% (bezogen auf Al-Analyse) LiCl = 1,6 Gew.% ( 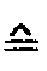 17 mol%, bezogen auf Al) Ausbeute: 73 % d.Th.

Der Filterrückstand wird mit 2-MeTHF gewaschen; es werden weitere 16 % d.Th. in Form der Waschfiltrate erhalten.

### Beispiel 2: Herstellung einer LiCl-armen LiAlH₄-Lösung in 2-MeTHF durch einen Einda m pfprozess

117 g der LiCl-haltigen Waschfiltrate aus Beispiel 1 werden bei 40 bis 60°C und einem reduziertem Druck von 250 mbar destillativ aufkonzentriert. Es werden insgesamt 80,0 g Lösemittel abdestilliert. Nach Entfernung von ungefähr 2/3 der erwähnten Menge beginnt sich ein farbloses Kristallisat abzuscheiden.

Nach Beendigung des Destillationsprozesses wird auf Raumtemperatur abgekühlt und die Suspension über eine G3-Glasfilterfritte klarfiltriert.

### Auswaage: 36,0 g

Die Analyse ergab folgendes:

**Tabelle 3:**

| Substanzprobe | Li | Al | H⁻ | Cl⁻ | LiAlH₄ | LiCl |
|---|---|---|---|---|---|---|
| | | (mmol/g) | | | (Gew. %) | (mol %) |
| vor Destillation | 0,77 | 0,45 | 1,87 | 0,18 | 1,7 | 40 |
| nach Destillation | 2,11 | 1,75 | 7,03 | 0,28 | 6,6 | 16 |

Durch einen weiteren Eindampfschritt auf eine LiAlH₄-Konzentration von 12,3 % wird der Gehalt an löslichem LiCl auf 7 mol% gesenkt.

### Beispiel 3: Herstellung einer 11 %igen LiAlH₄-Lösung in 2-MeTHF/Toluol

In einem inertisierten 1L-Reaktor werden 59,9 g LiH-Pulver in 140 g Toluol suspendiert und auf 75°C erwärmt. Zu dieser Suspension werden innerhalb von 80 Minuten 504 g einer 44 %igen AlCl₃-Lösung in einem Gemisch aus 2-MeTHF und Toluol und einem 2-MeTHF : AlCl₃-Verhältnis von 1,5 zudosiert. Nach Dosierende wird noch 30 Minuten bei 80°C nachgerührt und die Suspension dann auf ein vorgeheiztes Filter abgelassen.

Es werden 253 g einer gelben Lösung mit folgender Zusammensetzung erhalten:

| Analyse (mmol/g) | Li | Al | H⁻ | Cl⁻ |
|---|---|---|---|---|
| | 3,02 | 3,00 | 12,4 | 0,034 |

Die LiAlH₄-Konzentration beträgt 11,4% ( 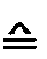 98 % d.Th.), die LiCl-Konzentration liegt in Bezug auf LiAlH₄ bei 1,1 mol%.

Der Filterrückstand wird zweimal mit Toluol gewaschen. In allen Filtraten wird 17,4 g LiAlH₄-Inhalt ( 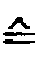 91 % d.Th.) erhalten.

## Patentansprüche

1. Verfahren zur Herstellung einer Lösung von LiAlH₄ in einem Lösemittel, welches 2-MeTHF ist oder in einer Lösemittelmischung, die 2-MeTHF enthält, **dadurch gekennzeichnet, dass** AlCl₃ mit LiH in 2-MeTHF oder in einer Lösemittelmischung, die 2-MeTHF enthält, umgesetzt wird.

2. Verfahren nach Anspruch 1, **dadurch gekennzeichnet, dass** die Reaktion in einer Lösemittelmischung aus 2-MeTHF und mindestens einem Kohlenwasserstoff durchgeführt wird, der aus Toluol, Ethylbenzol, Xylol, Cumol, Cyclohexan, Hexan, Methylcyclohexan, Heptan oder einer Mischungen aus mindestens zwei dieser Kohlenwasserstoffe ausgewählt ist.

3. Verfahren nach Anspruch 1 oder 2, **dadurch gekennzeichnet, dass** die Konzentration von LiH im Ansatz zwischen 3 und 17 Gew.-%, bevorzugt zwischen 5 und 15 Gew.-% beträgt.

4. Verfahren nach mindestens einem der Ansprüche 1 bis 3, **dadurch gekennzeichnet, dass** das Molverhälnis von 2-MeTHF : AlCl₃ zwischen 1 und 10, bevorzugt zwischen 1,3 und 5,0 liegt.

5. Verfahren nach mindestens einem der Ansprüche 1 bis 4, **dadurch gekennzeichnet, dass** das eingesetzte LiH-Pulver eine Korngröße < 30 µm hat.

6. Verfahren nach mindestens einem der Ansprüche 1 bis 5, **dadurch gekennzeichnet, dass** die Reaktionstemperatur zwischen 0 und 100°C, bevorzugt zwischen 20 und 90°C, besonders bevorzugt zwischen 30 und 80°C, liegt.

7. Verfahren nach mindestens einem der Ansprüche 1 bis 6, **dadurch gekennzeichnet, dass** das als Nebenprodukt anfallende LiCl abgetrennt wird.

8. Verfahren nach mindestens einem der Ansprüche 1 bis 7, **dadurch gekennzeichnet, dass** die Lösung auf ein Molverhältnis von 2-MeTHF : LiAlH₄ von maximal 3,5 konzentriert wird und das ausgefällte LiCl durch einen fest/flüssig-Trennschritt, bevorzugt durch Filtration, abgetrennt wird.

9. Verfahren nach mindestens einem der Ansprüche 1 bis 8, **dadurch gekennzeichnet, dass** die Reaktionslösung im Vakuum aufkonzentriert wird, bevorzugt bei einem Druck zwischen 1 bis 500 mbar, und bei einer Temperatur zwischen 20 und 100 °C.

## Claims

1. A process for the preparation of a solution of LiAlH₄ in a solvent, which is 2-MeTHF, or in a solvent mixture which contains 2-MeTHF, **characterised in that** AlCl₃ is reacted with LiH in 2-MeTHF or in a solvent mixture containing 2-MeTHF.

2. A process according to claim 1, **characterised in that** the reaction is carried out in a solvent mixture of 2-MeTHF and at least one hydrocarbon which is selected from toluene, ethylbenzene, xylene, cumene, cyclohexane, hexane, methylcyclohexane, heptane or a mixtures of at least two of these hydrocarbons.

3. A process according to claim 1 or 2, **characterised in that** the concentration of LiH in the feed is between 3 and 17 wt.%, preferably between 5 and 15 wt.%.

4. A process according to at least one of claims 1 to 3 **characterised in that** the molar ratio of 2-MeTHF:AlCl₃ is between 1 and 10, preferably between 1.3 and 5.0.

5. A process according to at least one of claims 1 to 4, **characterised in that** the LiH powder employed has a particle size of <30 µm.

6. A process according to at least one of claims 1 to 5, **characterised in that** the reaction temperature is between 0 and 100°C, preferably between 20 and 90°C, particularly preferably between 30 and 80°C.

7. A process according to at least one of claims 1 to 6, **characterised in that** the LiCl forming as a by-product is separated off.

8. A process according to at least one of claims 1 to 7, **characterised in that** the solution is concentrated to a molar ratio of 2-MeTHF:LiAlH₄ of no more than 3.5, and the precipitated LiCl is separated off by a solid/liquid separation step, preferably by filtration.

9. A process according to at least one of claims 1 to 8, **characterised in that** the reaction solution is concentrated *in vacuo*, preferably under a pressure of between 1 and 500 mbar, and at a temperature of between 20 and 100°C.

## Revendications

1. Procédé de préparation d'une solution d'hydrure de lithium et d'aluminium (LiA1H₄) dans un solvant qui est du 2-méthyl-tétrahydrofurane (2-MeTHF), ou dans un mélange de solvants qui contient du 2-méthyl-tétrahydrofurane, **caractérisé en ce qu'**on fait réagir du chlorure d'aluminium (AlCl₃) avec de l'hydrure de lithium (LiH), dans du 2-méthyl-tétrahydrofurane ou dans un mélange de solvants qui contient du 2-méthyl-tétrahydrofurane.

2. Procédé conforme à la revendication 1, **caractérisé en ce que** l'on effectue la réaction dans un mélange de solvants constitué de 2-méthyl-tétrahydrofurane et d'au moins un hydrocarbure, choisi parmi les toluène, éthyl-benzène, xylène, cumène, cyclohexane, méthyl-cyclohexane et heptane, ou d'un mélange d'au moins deux de ces hydrocarbures.

3. Procédé conforme à la revendication 1 ou 2, **caractérisé en ce que** la concentration de l'hydrure de lithium dans la charge vaut de 3 à 17 % en poids, et de préférence de 5 à 15 % en poids.

4. Procédé conforme à l'une au moins des revendications 1 à 3, **caractérisé en ce que** le rapport molaire 2-MeTHF/AlCl₃ vaut de 1 à 10, et de préférence de 1,3 à 5,0.

5. Procédé conforme à l'une au moins des revendications 1 à 4, **caractérisé en ce que** l'on utilise de l'hydrure de lithium à l'état de poudre présentant une taille de particules inférieure à 30 µm.

6. Procédé conforme à l'une au moins des revendications 1 à 5, **caractérisé en ce que** la température de réaction se situe dans l'intervalle qui va de 0 à 100 °C, de préférence de 20 à 90 °C et en particulier de 30 à 80 °C.

7. Procédé conforme à l'une au moins des revendications 1 à 6, **caractérisé en ce qu'**on sépare le précipité de chlorure de lithium qui se forme en tant que sous-produit.

8. Procédé conforme à l'une au moins des revendications 1 à 7, **caractérisé en ce qu'**on concentre la solution jusqu'à obtenir un rapport molaire 2-MeTHF/LiAlH₄ d'au maximum 3,5 et l'on sépare le précipité de chlorure de lithium en opérant une séparation solide/liquide, et de préférence une filtration.

9. Procédé conforme à l'une au moins des revendications 1 à 8, **caractérisé en ce qu'**on concentre encore la solution réactionnelle sous vide, de préférence sous une pression de 1 à 500 mbar, et à une température de 20 à 100 °C.
